# EUROPEAN PATENT APPLICATION

(11) **EP 4 656 556 A1**
(43) Date of publication of application: **03.12.2025**
(21) Application number: 24178778.7
(22) Date of filing: 29.05.2024
(51) Int. Cl.: B65G 1/04, B65G 1/137, G06Q 10/08, G06Q 10/087

(54) **A ROBOTIC VEHICLE**

(71) Applicant: AutoStore Technology AS, 5578 Nedre Vats (NO)
(72) Inventor: Strømme, Erik, Nedre Vats (NO)
(74) Representative: Kilburn & Strode LLP

(57) **Abstract**

The disclosure relates to a robotic vehicle for retrieving, returning, and/or rearranging goods stored within a storage grid, the robotic vehicle comprising: a first communication interface for wirelessly communicating with a system controller via a first network connection; and a second communication interface for wirelessly communicating with a port via a second network connection, the port being configured for coupling to the storage grid.

## Description

### TECHNICAL FIELD

The disclosure relates to a robotic vehicle. More particularly, it relates to a robotic vehicle for retrieving, returning, and/or rearranging goods stored within a storage grid, a port configured for coupling to a storage grid, an automated storage and retrieval system, a method performed by a robotic vehicle and a method performed by a port.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The robotic container-handling vehicles are arranged to travel along the top of the grid, to retrieve, return or rearrange containers within the grid. The robotic container-handling vehicles can travel in X and Y directions along the rails, and a control system is provided to optimise route planning. The robotic container-handling vehicles are configured to transport a container between the grid and a port, which allows an operator such as a human operate to access the contents of a container. A control system is used to coordinate the activities of the robotic container-handling vehicles, for example instructions to retrieve or deliver a container from or to a port.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a simplified view of an automated storage and retrieval system in which a robotic container-handling vehicle is transporting a container to a port;
Fig. 5B shows a simplified view of an automated storage and retrieval system in which a robotic container-handling vehicle is retrieving a container from a port;
Fig. 6A shows a side view of a first robotic container-handling vehicle suitable for use in the system of Fig. 1;
Fig. 6B shows a side view of a second robotic container-handling vehicle suitable for use in the system of Fig. 1;
Fig. 7 shows a flowchart of a method performed by a robotic container-handling vehicle suitable for use in the system of Fig. 1; and
Fig. 8 shows a flowchart of a method performed by a port suitable for use in the system of Fig. 1.

### DETAILED DESCRIPTION

In overview, the disclosure relates to a robotic container-handling vehicle, a port, and methods thereof. In an automated storage and retrieval system, much of the communication between components (such as robotic container-handling vehicles, ports and the like) is achieved via a system controller which plans routes for the robotic container-handling vehicles and coordinates the operations thereof. However, this results in a high volume of wireless traffic. The use of a second communication interface on each of the robotic container-handling vehicle and the port, which is different from a communication interface used to communicate between the robotic container-handling vehicle and a system controller (and similarly between the port and the system controller) can reduce the amount of wireless traffic, and can avoid or mitigate communication delays. In some embodiments, the two communication interfaces may use different wireless communication standards in order to avoid or mitigate interference. In some embodiments, use of a short-range communication standard (such as infrared) can particularly avoid or mitigate communication delays and avoid interference with existing wireless traffic.

### Automated storage and retrieval system overview

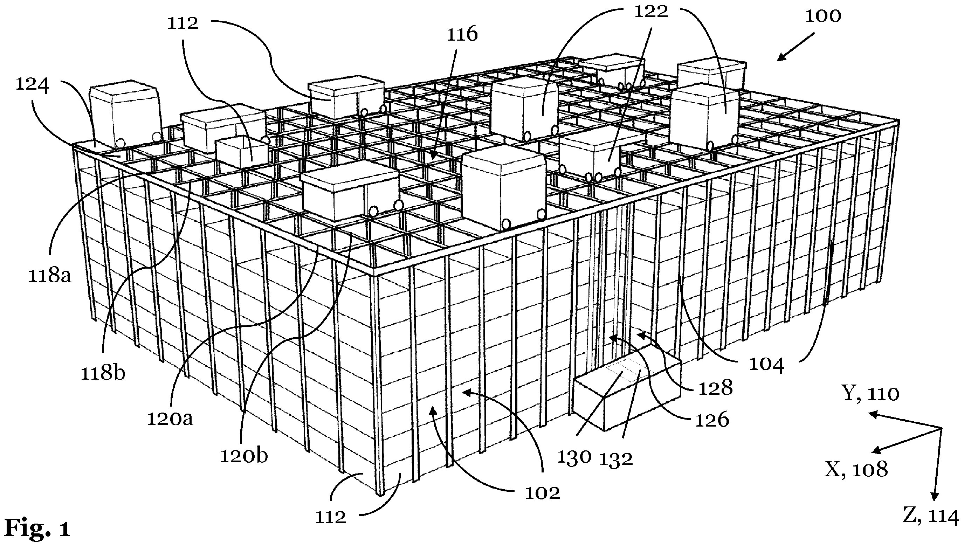

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

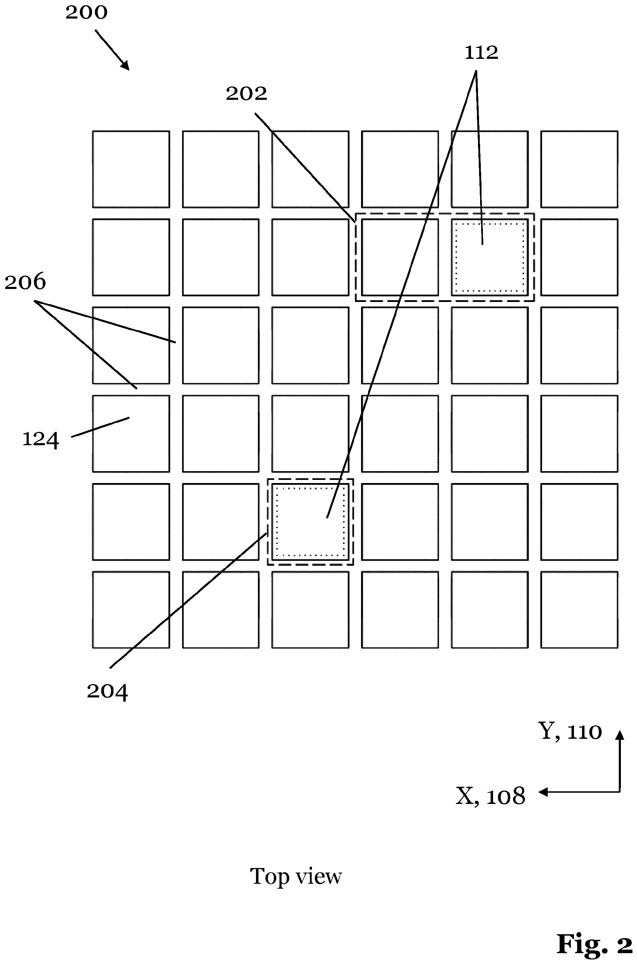

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

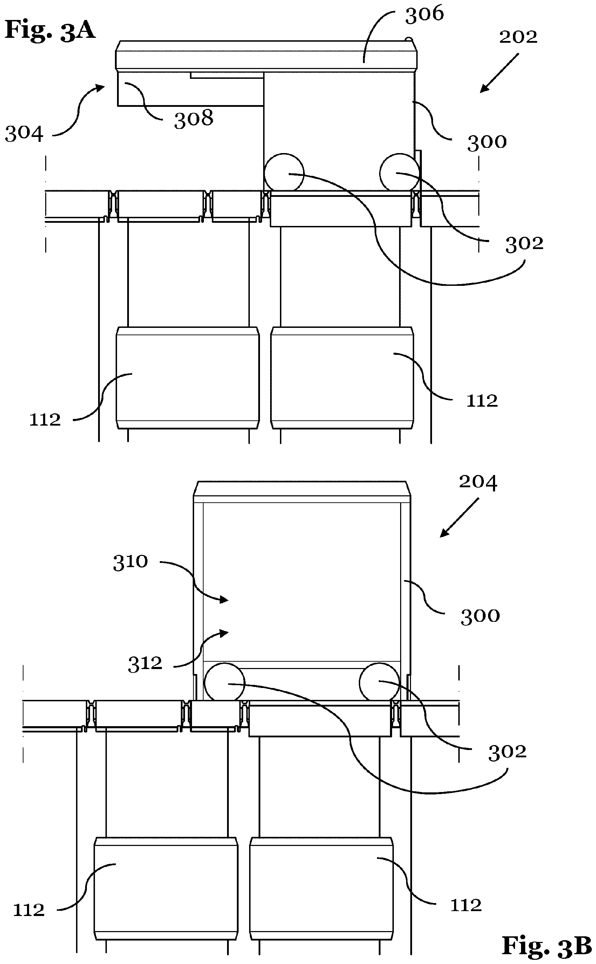

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

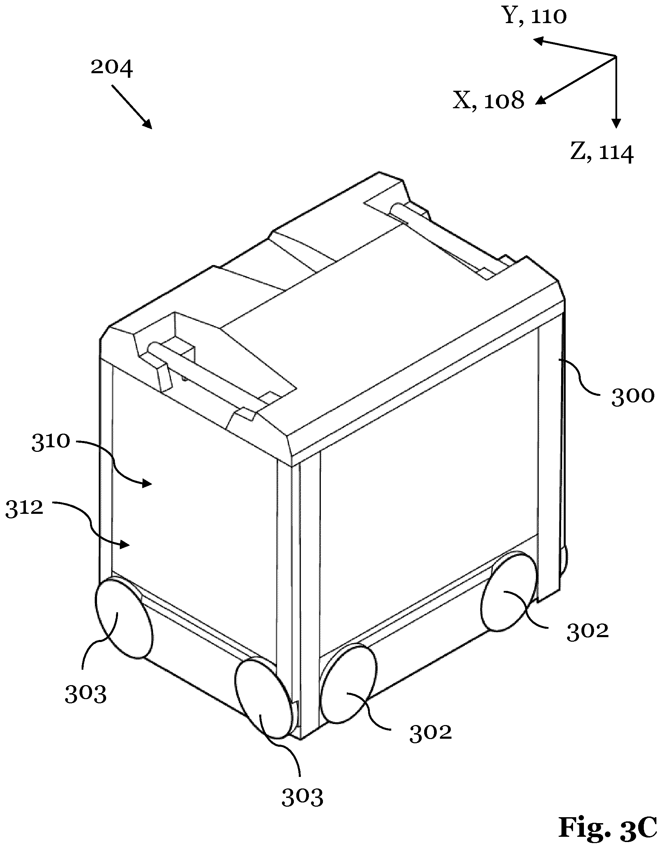

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

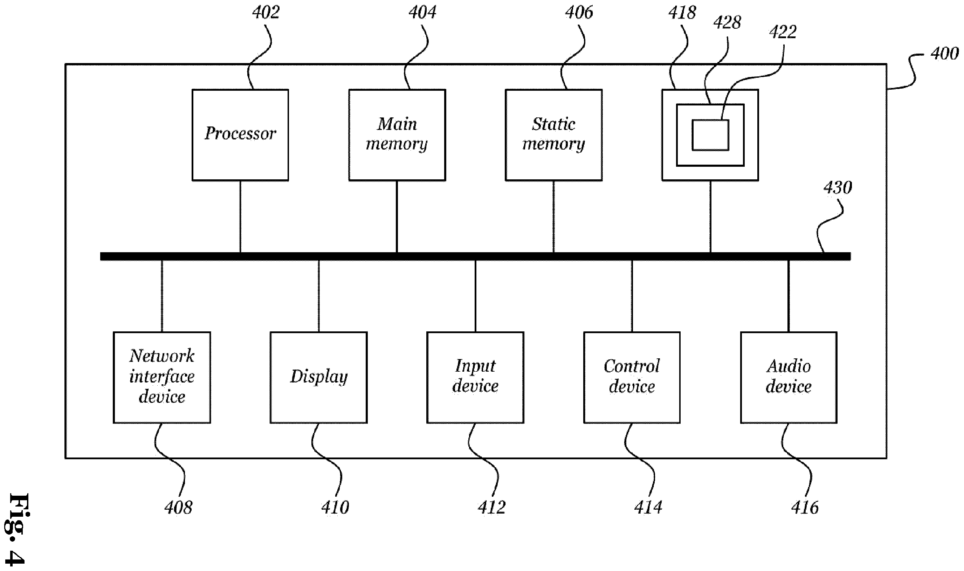

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

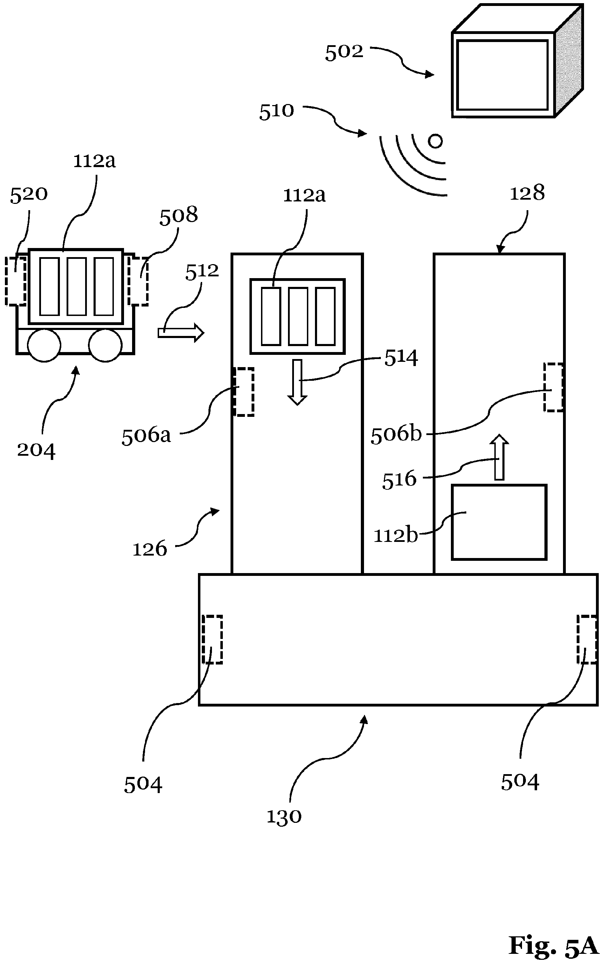

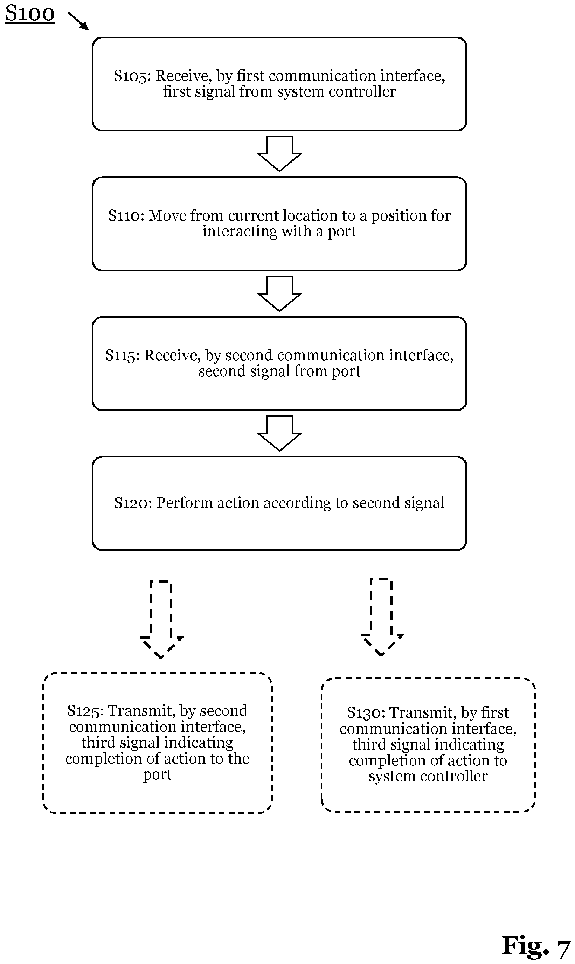

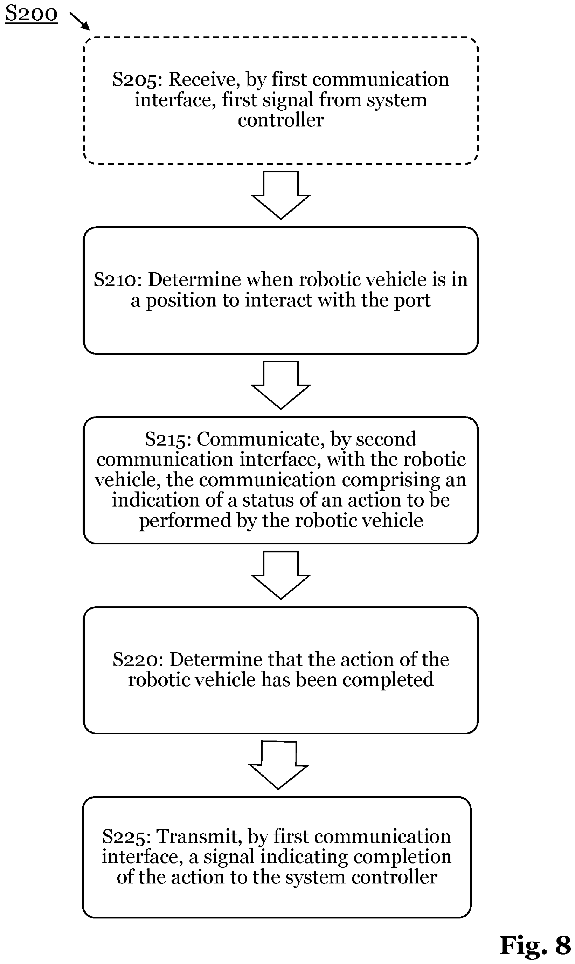

Fig. 5A shows a simplified view of an automated storage and retrieval system suitable for carrying out the method as describe in Fig. 7 or Fig 8, in which a robotic container-handling vehicle 204 is transporting a container 112a to a port 130.

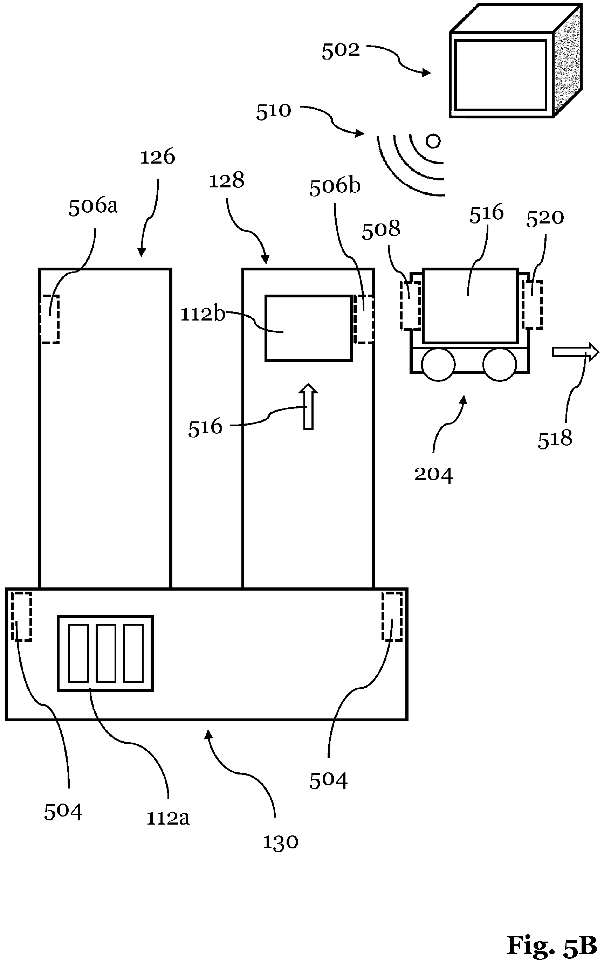

Illustrated in Fig. 5A is a system controller 502, a robotic container-handling vehicle 204 and a port 130 with associated port columns 126 and 128. Although an 'internal cavity' robot as described above in reference to Fig. 3B is shown in Fig. 5A & Fig.5B, both robotic container-handling vehicles 202 and 204 are compatible with and suitable for the disclosed system and method. As described above in reference to Fig. 1, a port 130 is configured to accept containers 112 from a port column 126 and allow access to the contents of a container 112a to a user at the port 130. After a user has modified contents of the container 112a, the port 130 is configured to move the container 112b to port column 128 where the container 112b is positioned to be collected by a robotic container-handling vehicle 204.

The robotic container-handling vehicle 204 of Fig. 5A is shown comprising a first communication interface 520 and a second communication interface 508.

In the illustrative embodiment of Fig. 5A, system controller 502 is configured to transmit a first signal 510 to robotic container-handling vehicle 204 and/or port 130. The robotic container-handling vehicle 204 is shown moving, as shown by arrow 512, towards a position to interact with the port 130 via port column 126 responsive to the first signal 510. The robotic container handling vehicle 204, shown in Fig. 5A is shown carrying a container 112a to the port column 126. The robotic container-handling vehicle 204 is configured to communicate with the port 130 via a second communication interface 508 of the robotic container-handling vehicle 204. In the illustrated example implementation of Fig. 5A, second communication interfaces 506a, 506b of the port 130 are provided on the port columns 126, 128 to facilitate interaction with the second communication interface 508 of the robotic container-handling vehicle 204.

Provision of a second communication interface 508, 506a, 506b allows communication between the container-handling vehicle 204 and the port 130 without transmission to and from the system controller 502. This reduces wireless traffic between the robotic container-handling vehicle 204 and the system controller 502. In an automated storage and retrieval system many robotic container-handling vehicles 204 are employed and so reduction in wireless traffic between the robotic container-handling vehicles 204 and the system controller 502 is beneficial to reduce interference.

Responsive to receiving a second signal from the port 130 via the second communication interface 508 of the robotic container-handling vehicle 204, and the second communication interface 506a of the port 130, the robotic container-handling vehicle 204 is configured to lower the container 112a through the port column 126 as shown by arrow 514 and into the port 130. Shown in Fig. 5A is a container 112b with modified contents after interaction with the port 130. The container 112b with modified contents is shown as it is lifted, as shown by arrow 516, by a further robotic container-handling vehicle (not shown).

In some example implementations, the robotic container-handling vehicle 204 comprises a power source (not shown in Fig. 5A to Fig.6B) arranged to provide power to the first communication interface 520 and the second communication interface 508. A common power source between the first communication interface 520 and the second communication interface 508 allows for a reduced number of components when constructing the robotic container-handling vehicle 204. In some example implementations, the robotic container-handling vehicle 204 comprises a first power source (not shown in Fig. 5A to Fig. 6B) to provide power to the first communication interface 520 and a second power source (not shown in Fig. 5A to Fig. 6B) to provide power to the second communication interface 508. Separate power sources for the first communication interface 520 and second communication interface 508 provides benefits in weight distribution of components by allowing the components to be more easily packaged around the robotic container-handling vehicle 204.

In some example implementations, the system controller 502 is configured to transmit the first signal 510 wirelessly to a first communication interface 520 of the robotic container handling device 204 and/or first communication interface 504 of the port 130. In some example implementations, the first communication interface 504 of the port 130 is configured to communicate with the system controller 502 via a first network connection. In some example implementations, the first communication interface 520 of the robotic container-handling vehicle 204 is configured to communicate wirelessly with the system controller 502. In some embodiments, the second communication interface 508 is configured to communicate wirelessly with a second communication interface 506a of the port 130.

In some example implementations, the first communication interface 520 of the robotic container-handling vehicle is configured according to a first wireless communication standard. In some example implementations, the second communication interfaces, 508, 506a and 506b are configured to communicate via a second wireless communication standard different to the first wireless communication standard. Separation of the first and second wireless communication networks by different wireless communication standards reduces traffic and therefore risk of interference on each of the two separate wireless networks. This reduces the chance of missed communications or required repeat transmissions on each of the networks. In some example implementations, the first communication interface 520, 504 and the second communication interfaces 508, 506a and 506b are configured to communicate via the same wireless standard. Use of the same wireless standard for both the first and the second wireless network allows for a reduction in complexity of the robotic container-handling vehicle 204 during construction, in that only one set of standards needs to be followed and so similar componentry can be used to construct both the first and the second communication interfaces 508, 506a, 506b.

In some example implementations, the first wireless standard is one of: infrared, near-field communication, Wi-Fi, optical communication, light source communication, and/or Bluetooth. In some example implementations, the second wireless communication standard is one of: infrared, near-field communication, Wi-Fi, optical communication, light source communication, and/or Bluetooth. In some example implementations, the robotic container-handling vehicle 204 transmits, via the second communication interface 508, an indication of status of an action to be performed (such as an instruction to pick up a container) to the port 130 via second communication interface 506b. Such an indication may allow the port to position a further container 112b in the port column 128 for collection by another robotic container-handling vehicle 204, 204 without waiting for instruction from a system controller 502. Once the action of the robotic container-handling vehicle 204, has been completed, the port 130 may be configured to transmit by first communication interface 504 a signal to the system controller 502 indicating completion of the action. In some example implementations, the robotic container-handling vehicle 204 may transmit the signal indication the action is complete via second communication interface 508 and second communication interface 506b.

Fig. 5B shows a simplified view of an automated storage and retrieval system in which a robotic container-handling vehicle 204 is retrieving a container 112b from a port 130. Illustrated is a port 130 containing a container 112a, and a container 112b shown as it is lifted 516 from the port 130 by a robotic container-handling vehicle 204. Robotic container-handling vehicle 204 is shown carrying a container 112b and moving away from the port column 128 as shown by arrow 518.

System controller 502 is configured to transmit a first signal 510 to the robotic container-handling vehicle 204 and/or the port 130. In the illustrated implementation, the system controller 502 is configured to transmit the first signal 510 wirelessly to a first communication interface 520 of the robotic container handling vehicle 204 and/or the first communication interface 504 of the port 130. The robotic container-handling vehicle 204 is shown in a position to interact with the port 130 via port column 128 responsive to the first signal. The robotic container-handling vehicle is shown raising a container with modified contents 112b from the port via the port column 128 responsive to receipt of a second signal via the second communication interface 506ab of the port 130 and the second communication interface 508 of the robotic container-handling vehicle 204. As shown by arrow 518, once the robotic container-handling vehicle 204 has raised the container 112b the robotic container-handling vehicle 204 moves away from the port column 128, for example, to a position where it can no longer interact with the port 130.

In some example implementations, the robotic container-handling vehicle 204 is configured to transmit a third signal to the port 130 via second communication interface 508 and second communication interface 506b of the port 130 indicating that the action is complete. The action may be, for example, retrieving the container. In some example implementations, the port 130 is configured to transmit a signal via first communication interface 504 to the system controller 502 indicating that the action is complete.

In some example implementations, an interaction between a robotic container-handling vehicle 204, and a port 130 or port column 126, 128 may be any of: delivering a container 112, collecting a container 112, exchanging a container 223, and/or communicating with a port 130 via second communication interface 508, 506a, 506b. In some example implementations the first communication interface 504 of the port is configured to communicate with the system controller 502 via a first network connection. In some example implementations, the first communication interface 520 of the robotic container-handling vehicle 204 is configured to communicate wirelessly with the system controller 502. Non-wireless communication between the port 130 and the system controller 502 further reduces wireless communication traffic and reduces interference.

In some example implementations, the second communication interface 508 of the robotic container-handling vehicle communicates wirelessly with a second communication interface 506b of the port 130 before lifting a container 112b.

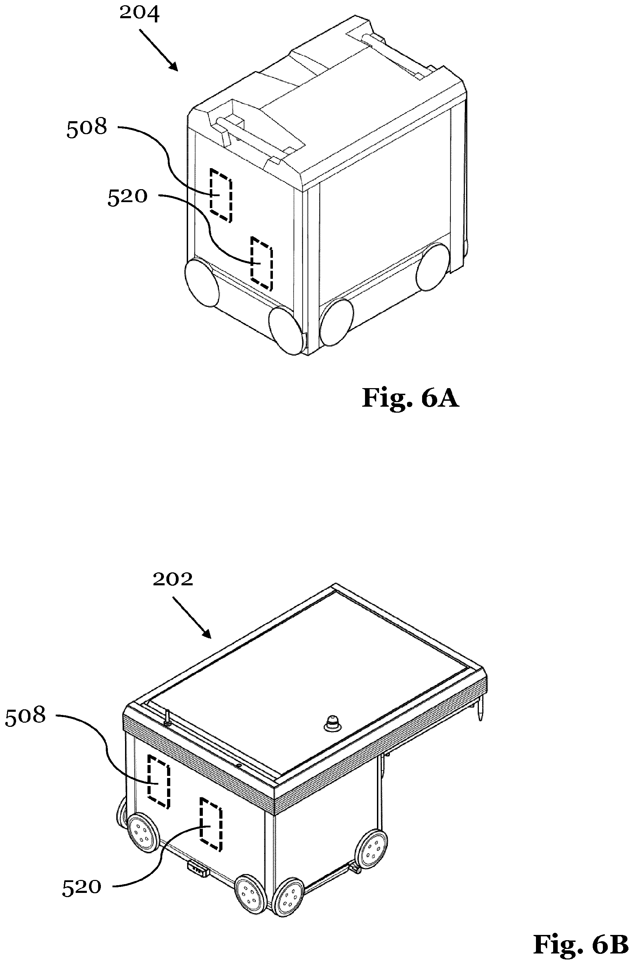

Fig. 6A shows a side view of a first robotic container-handling vehicle 204 suitable for use in the system of Fig. 1, and Fig. 6B shows a side view of a second robotic container-handling vehicle 204 suitable for use in the system of Fig. 1.

Fig. 6A shows an 'internal cavity' type robotic container-handling vehicle 204 (as described above in reference to Fig. 3B) equipped with a first communication interface 520 and a second communication interface 508. Fig. 6B shows a `cantilever' type robot 202 (as described above in reference to Fig. 3A) equipped with a first communication interface 520 and a second communication interface 508. As described herein, the first communication interface 520 and/or the second communication interface 508 may be configured to communicate by one of: infrared, near-field communication, Wi-Fi, optical communication, light source communication, and Bluetooth. Both robotic container-handling vehicles 202 and 204 are compatible with and suitable for the disclosed system and method.

Fig. 7 shows a flowchart of a method S100 performed by a robotic container-handling vehicle 202, 204 suitable for use in the system of Fig. 1. The example implementations of Fig. 5A and Fig. 5B are suitable for performing the method S100.

Method S100 comprises receiving S105 a first signal, for example 510, from a system controller 502, by a first communication interface 520. That is, the first signal is received by the first communication interface 520 of the robotic container-handling vehicle 202, 204. The first communication interface 520 is suitable for wirelessly communicating with the system controller 502 via a first network connection.

The first signal 510 maybe a signal indicating an instruction for the robotic container-handling vehicle 202, 204, such as an instruction to go directly to a particular port 130 (e.g. to collect a container 112b or to deliver a container 112a already being carried by the robotic container-handling vehicle 202, 204), an instruction to collect a particular container 112a from a position within the grid and deliver the container 112a to a particular port 130, or the like.

Method S100 comprises moving S110 from a current location to a position for interacting with a port 130. In response to the first signal 510, the robotic container-handling vehicle 202, 204 moves (for example, 512) from its current location to a position in which the robotic container-handling vehicle 202, 204 is capable of interacting with a port 130. Interacting with the port may comprise sending and/or receiving wireless signals to/from the port via the second communication interface 508 of the robotic container-handling vehicle 202, 204.

For example, a position for interacting with a port may be a position adjacent, above or within one cell of the port 130. The position for interacting with the port may be any position that the robotic container-handling vehicle 202, 204 is capable of reaching within or adjacent to the grid in which the robotic container-handling vehicle 202, 204 is capable of sending and/or receiving wireless signals to/from the port 130.

Interacting with a port 130 may include one or more of: delivering a container 112a to the port 130, collecting a container 112b from the port 130, exchanging a container 112 for another container 112 with the port 130, and the like.

Optionally, the robotic container-handling vehicle 202, 204 may send a signal such as a confirmatory signal to the port 130 (e.g. to the second communication interface 506a, 506b of the port 130) via the second communication interface 508 of the robotic container-handling vehicle 202, 204 to confirm to the port 130 that the robotic container-handling vehicle 202, 204 is in position for interacting with the port 130. The signal may, additionally or alternatively, indicate to the port 130 (e.g. confirm to the port 130) an identification of a container 112 being carried by the robotic container-handling vehicle 202, 204.

Method S100 comprises receiving S115, by the second communication interface 508 of the robotic container-handling vehicle 202, 204, a second signal from the port 130. The second signal may be an instruction signal from the port 130 to the robotic container-handling vehicle 202, 204, for example instructing the robotic container-handling vehicle 202, 204 to prepare to collect a container 112b from the port 130, to deposit a container 112a to the port, or the like. The second signal maybe received by the second communication interface 508 of the robotic container-handling vehicle 202, 204 and may have been transmitted by the second communication interface 506a, 506b of the port 130.

Method S100 comprises performing S120 an action according to the second signal. For example, upon receiving S115 a second signal instructing the robotic container-handling vehicle 202, 204 to deliver a container 112a, the robotic container-handling vehicle 202, 204 may perform the action of delivering the container 112a to the port 130. Similarly, upon receiving a second signal from the port 130 instructing the robotic container-handling vehicle 202, 204 to collect a container 112b for example, the robotic container-handling vehicle 202, 204 may perform the action of collecting the container 112b from the port 130.

Optionally, method S100 may comprise transmitting S125, by the second communication interface 508 of the robotic container-handling vehicle 202, 204, a third signal indicating completion of the action to the port 130. For example, upon collecting a container 112b from the port 130, the robotic container-handling vehicle 202, 204 may transmit a third signal to the port 130 to confirm to the port 130 that the robotic container-handling vehicle 202, 204 has collected the container 112b from the port 130. The third signal may be transmitted by the second communication interface 508 of the robotic container-handling vehicle 202, 204 and may be received by the second communication interface 506a, 506b of the port 130.

Optionally, method S100 may comprise transmitting S130, by the first communication interface 520 of the robotic container-handling vehicle 202, 204, a third signal indicating completion of the action to the system controller 502. For example, upon collecting a container 112b from the port, the robotic container-handling vehicle 202, 204 may transmit a third signal to the system controller 502 to indicate to the system controller 502 that the robotic container-handling vehicle 202, 204 has collected the container 112b from the port 130.

In some embodiments, the method S100 may include one or both of operations S125 and S130, and in cases where the method S100 includes both operations S125 and S130, these operations may be performed in any order, simultaneously or substantially simultaneously. The third signal transmitted to the system controller and the third signal transmitted to the port 130 may include the same data, or may be different.

In some embodiments, the method S100 may include only one of operations S125 and S130. For example, in some embodiments, method S100 may include operation S125, i.e. transmitting the third signal to the port 130 by the second communication interface 508 of the robotic container-handling vehicle 202, 204. The port 130 may then be configured to send a confirmatory message to the system controller 502. As another example, in some embodiments, method S100 may include operation S130 but not operation S125 - that is, the method may include transmitting a third signal from the first communication interface 520 of the robotic container-handling vehicle 202, 204 to the system controller 502 to indicate to the system controller 502 that the action has been performed. In such cases, a confirmatory signal may or may not be sent to the port 130, for example depending on system settings or port settings.

Fig. 8 shows a flowchart of a method S200 performed by a port 130 suitable for use in the system of Fig. 1. The example implementations of Fig. 5A and Fig. 5B are suitable for performing the method S200.

Optionally, the method S200 may comprise receiving S205, by the first communication interface 504 of the port 130, a first signal 510 from the system controller 502. The first signal 510 may include, for example, an instruction for the port 130, an indication that a robotic container-handling vehicle 202, 204 is on its way to the port 130, or the like. This operation, if present, may precede other operations in the method S200.

Method S200 comprises determining S210 when a robotic container-handling vehicle 202, 204 is in a position to interact with the port 130. The position to interact with the port 130 may be a position of the robotic container-handling vehicle 202, 204 in which the robotic container-handling vehicle 202, 204 is able to interact with the port 130. Interacting with a port 130 may comprise one or more of delivering a container 112a by the robotic container-handling vehicle 202, 204 to the port 130, collecting a container 112b by the robotic container-handling vehicle 202, 204 from the port 130, or exchanging a container 112 for another container 112 between the robotic container-handling vehicle 202, 204 and the port 130.

Method S200 comprises communicating S215, by the second communication interface of the port 130, with the robotic container-handling vehicle 202, 204. The communication comprises an indication of a status of an action to be performed by the robotic vehicle 202, 204. For example, the indication of a status of an action to be performed by the robotic vehicle 202, 204 may be an instruction to perform a new action, an indication that the robotic vehicle 202, 204 is about to deliver a container 112a to the port 130, an indication that the robotic vehicle 202, 204 is about to collect a container 112b from the port 130, or an indication that an action has been completed, is in progress, or has not yet begun. The indication of a status of an action to be performed by the robotic vehicle 202, 204 may comprise an instruction to the port 130, e.g. to prepare a container 112b for collection by the robotic vehicle 202, 204, to prepare to receive a container 112a from the robotic vehicle 202, 204 or the like. These examples are non-limiting.

Communicating with the robotic vehicle 202, 204 may comprise transmitting, by the port 130 to the robotic vehicle 202, 204, an indication of an action to be performed, such as an instruction (e.g. an instruction for the robotic vehicle to collect a container). Communicating with the robotic vehicle 202, 204 may comprise receiving, from the robotic vehicle 202, 204, an indication of an action to be performed by the robotic vehicle 202, 204, such as an indication that the robotic vehicle 202, 204 is to collect a container 112b from the port 130. In some embodiments, one of the robotic vehicle 202, 204 and the port 130 receives an instruction from the system controller 502 via a first communication interface 504, 520, and instructs the other of the robotic vehicle 202, 204 and the port 130 accordingly via a second communication interface 508, 506a, 506b. In other embodiments, both the robotic vehicle 202, 204 and the port 130 receive instructions from the system controller 502.

The action to be performed by the robotic vehicle may be, for example, collecting a container 112b from the port 130, delivering a container 112a to the port 130, or moving 512 to a position for interacting with the port 130. These actions may have corresponding actions to be performed by the port 130, such as preparing to collect a container 112a from a robotic vehicle 202, 204, preparing to deliver a container 112b to the robotic vehicle 202, 204, or preparing to interact with the robotic vehicle 202, 204. Preparing to interact with the robotic vehicle 202, 204 may comprise changing a power mode for the second communication interface 506a, 506b, e.g. changing from a low-power (e.g. sleep) mode to a higher power (e.g. an operational) mode.

Method S200 further comprises determining S220 that the action of the robotic vehicle 202, 204 has been completed. Determining that the action of the robotic vehicle 202, 204 has been completed may comprise receiving a confirmatory signal from the robotic vehicle 202, 204 indicating that the robotic vehicle 202, 204 has completed the action. Completion of the action may be determined based on the indication of a status of an action to be performed by the robotic vehicle 202, 204. These examples are non-limiting.

Method S200 further comprises transmitting S225, by the first communication interface 504, a signal indicating completion of the action to the system controller. Transmitting a signal indicating completion of the action may comprise transmitting a signal from the first communication interface 504 of the port 130 to the system controller 504. In some example implementations, transmitting a signal indicating completion of an action to the system controller 502 may include transmitting a signal from the first communication interface 520 of the robotic container-handling vehicle 202, 204 to the system controller 502.

### Penultimate comments

In an implementation, there is provided a robotic vehicle for retrieving, returning, and/or rearranging goods stored within a storage grid. The robotic vehicle comprises a first communication interface for wirelessly communicating with a system controller via a first network connection. The robotic vehicle further comprises a second communication interface for wirelessly communicating with a port via a second network connection, the port being configured for coupling to the storage grid.

The use of a second communication interface on each of the robotic container-handling vehicle and the port, which is different from a communication interface used to communicate between the robotic container-handling vehicle and a system controller (and similarly between the port and the system controller) can reduce the amount of wireless traffic, and can avoid or mitigate communication delays.

In some example implementations the first communication interface is configured to operate using a first wireless communication standard and the second communication interface is configured to operate using a second wireless communication standard different than the first wireless communication standard.

Separation of the first and second wireless communication networks by different wireless communication standards reduces traffic and therefore risk of interference on each of the two separate wireless networks. This reduces the chance of missed communications or required repeat transmissions on each of the networks.

In some example implementations the second wireless communication standard is infrared, and the second communication interface comprises an infrared transceiver.

Using a short-range wireless communication standard such as infrared avoids or mitigates communication delays.

In some example implementations the second wireless communication standard is one of: near-field communication, WiFi, optical communication, light source communication, and Bluetooth.

A range of short-range communication standards can be employed to mitigate or avoid communication delays.

In some example implementations the first network connection is configured to operate using a first network and the second network connection is configured to operate using a second network, the first network and the second network using the same wireless communication standard.

Use of the same wireless standard for both the first and the second wireless network allows for a reduction in complexity of the robot during construction, in that only one set of standards needs to be followed and so similar componentry can be used to construct both the first and the second communication interfaces.

In some example implementations the robotic container-handling vehicle comprises a power source arranged to provide power to the first communication interface and the second communication interface.

A common power source between the first communication interface and the second communication interface allows for a reduced number of components when constructing the robotic container-handling vehicle.

In some example implementations the robotic container-handling vehicle further comprises a first power source arranged to provide power to the first communication interface, and a second power source arranged to provide power to the second communication interface.

Separate power sources for the first and second communication interfaces provides benefits in weight distribution of components by allowing the components to be more easily packaged around the robotic container-handling vehicle.

In some example implementations, a port configured for coupling to a storage grid is provided. The port comprises a first communication interface for communicating with a system controller via a first network connection and a second communication interface for wirelessly communicating with a robotic vehicle via a second network connection. The robotic vehicle being suitable for retrieving, returning and/or rearranging goods stored within a storage grid.

A port equipped with a second communication interface which is different from a communication interface used to communicate between the port and the system controller can reduce the amount of wireless traffic in the first communication interface, and can avoid or mitigate communication delays.

In some example implementations of the port, the first communication interface is configured to operate using a first wireless communication standard and the second communication interface is configured to operate using a second wireless communication standard different than the first wireless communication standard.

Separation of the first and second wireless communication networks by different wireless communication standards reduces traffic and therefore risk of interference on each of the two separate wireless networks. This reduces the chance of missed communications or required repeat transmissions on each of the networks.

In some example implementations of the port, the second wireless communication standard is infrared, and the second communication interface comprises an infrared transceiver.

Using a short-range wireless communication standard such as infrared avoids or mitigates communication delays.

In some example implementations of the port, the second wireless communication standard is one of: near-field communication, WiFi, optical communication, light source communication, and Bluetooth.

A range of short-range communication standards can be employed to mitigate or avoid communication delays.

In some example implementations of the port, the first network connection is configured to operate using a first network and the second network connection is configured to operate using a second network, the first network and the second network using the same wireless communication standard.

Use of the same wireless standard for both the first and the second wireless network allows for a reduction in complexity of the port when constructed, in that only one set of standards needs to be followed and so similar componentry can be used to construct both the first and the second communication interfaces.

In some example implementations, an automated storage and retrieval system comprises a storage grid, the robotic vehicle as described in the foregoing arranged to traverse the storage grid, and the port as described in the foregoing arranged to communicate with the robotic vehicle.

The use of a second communication interface on each of the robotic container-handling vehicle and the port, which is different from a communication interface used to communicate between the robotic container-handling vehicle and a system controller (and similarly between the port and the system controller) can reduce the amount of wireless traffic, and can avoid or mitigate communication delays.

In some example implementations, a method for a robotic vehicle comprises: receiving, by the first communication interface, a first signal from the system controller; moving from a current location to a position for interacting with the port; receiving, by the second communication interface, a second signal from the port; and performing an action according to the second signal. The robotic vehicle of these implementations comprises a first communication interface for wirelessly communicating with a system controller via a first network connection and a second communication interface for wirelessly communicating with a port via a second network connection.

The use of a second communication interface on each of the robotic container-handling vehicle and the port, which is different from a communication interface used to communicate between the robotic container-handling vehicle and a system controller (and similarly between the port and the system controller) can reduce the amount of wireless traffic, and can avoid or mitigate communication delays.

In some example implementations, a method for a port comprises: determining when the robotic vehicle is in a position to interact with the port; upon determining that the robotic vehicle is in the position for interacting with the port, communicating, by the second communication interface, with the robotic vehicle, the communication comprising an indication of a status of an action to be performed by the robotic vehicle; determining that the action of the robotic vehicle has been completed; and transmitting, by the first communication interface, a signal indicating completion of the action to the system controller. The port of these example implementations is configured for coupling to a storage grid, the port comprising a first communication interface for wirelessly communicating with a system controller via a first network connection and a second communication interface for wirelessly communicating with a robotic vehicle via a second network connection.

The use of a second communication interface on each of the robotic container-handling vehicle and the port, which is different from a communication interface used to communicate between the robotic container-handling vehicle and a system controller (and similarly between the port and the system controller) can reduce the amount of wireless traffic, and can avoid or mitigate communication delays.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic vehicle for retrieving, returning, and/or rearranging goods stored within a storage grid, the robotic vehicle comprising:
- a first communication interface for wirelessly communicating with a system controller via a first network connection; and
- a second communication interface for wirelessly communicating with a port via a second network connection, the port being configured for coupling to the storage grid.

2. The robotic vehicle of claim 1, wherein the first communication interface is configured to operate using a first wireless communication standard and the second communication interface is configured to operate using a second wireless communication standard different than the first wireless communication standard.

3. The robotic vehicle of claim 2, wherein the second wireless communication standard is infrared, and wherein the second communication interface comprises an infrared transceiver.

4. The robotic vehicle of claim 2, wherein the second wireless communication standard is one of: near-field communication, WiFi, optical communication, light source communication, and Bluetooth.

5. The robotic vehicle of claim 1, wherein the first network connection is configured to operate using a first network and the second network connection is configured to operate using a second network, the first network and the second network using the same wireless communication standard.

6. The robotic vehicle of any preceding claim, further comprising a power source arranged to provide power to the first communication interface and the second communication interface.

7. The robotic vehicle of any one of claims 1 to 5, further comprising a first power source arranged to provide power to the first communication interface and a second power source arranged to provide power to the second communication interface.

8. A port configured for coupling to a storage grid, the port comprising:
- a first communication interface for communicating with a system controller via a first network connection;
- a second communication interface for wirelessly communicating with a robotic vehicle via a second network connection, the robotic vehicle being for retrieving, returning and/or rearranging goods stored within a storage grid.

9. The port of claim 8, wherein the first communication interface is configured to operate using a first wireless communication standard and the second communication interface is configured to operate using a second wireless communication standard different than the first wireless communication standard.

10. The port vehicle of claim 9, wherein the second wireless communication standard is infrared, and wherein the second communication interface comprises an infrared transceiver.

11. The port of claim 9, wherein the second wireless communication standard is one of: near-field communication, WiFi, optical communication, light source communication, and Bluetooth.

12. The port of claim 8, wherein the first network connection is configured to operate using a first network and the second network connection is configured to operate using a second network, the first network and the second network using the same wireless communication standard.

13. An automated storage and retrieval system comprising a storage grid, the robotic vehicle of any one of claims 1 to 7 arranged to traverse the storage grid, and the port of any one of claims 8 to 12 arranged to communicate with the robotic vehicle.

14. A method performed by a robotic vehicle comprising a first communication interface for wirelessly communicating with a system controller via a first network connection and a second communication interface for wirelessly communicating with a port via a second network connection, the method comprising:
receiving, by the first communication interface, a first signal from the system controller;
moving from a current location to a position for interacting with the port;
receiving, by the second communication interface, a second signal from the port; and
performing an action according to the second signal.

15. A method performed by a port configured for coupling to a storage grid, the port comprising a first communication interface for wirelessly communicating with a system controller via a first network connection and a second communication interface for wirelessly communicating with a robotic vehicle via a second network connection, the method comprising:
determining when the robotic vehicle is in a position to interact with the port;
upon determining that the robotic vehicle is in the position for interacting with the port, communicating, by the second communication interface, with the robotic vehicle, the communication comprising an indication of a status of an action to be performed by the robotic vehicle;
determining that the action of the robotic vehicle has been completed; and
transmitting, by the first communication interface, a signal indicating completion of the action to the system controller.
